# EUROPEAN PATENT APPLICATION

(11) **EP 4 050 080 A1**
(43) Date of publication of application: **31.08.2022**
(21) Application number: 20880255.3
(22) Date of filing: 12.10.2020
(51) Int. Cl.: C09K 3/18

(54) **WATERPROOF, OILPROOF AGENT COMPOSITION AND METHOD FOR PRODUCING SAME**

(30) Priority: 24.10.2019 JP 2019193654
(71) Applicant: AGC INC., Chiyoda-ku, Tokyo 1008405 (JP)
(72) Inventor: KAMIJO, Yuzuka, Tokyo 100-8405 (JP); HARA, Hiroyuki, Tokyo 100-8405 (JP); TAKEMURA, Motohiro, Tokyo 100-8405 (JP)
(74) Representative: Müller-Boré & Partner Patentanwälte PartG mbB
(86) International application number: PCT/JP2020/038484
(87) International publication number: WO 2021/079774

(57) **Abstract**

A water- and oil-proofing composition stable under highly alkaline conditions is provided. A water- and oil-proofing composition comprising a fluorinated polymer and an aqueous medium, wherein the fluorinated polymer comprises units based on a monomer a and units based on a monomer b. Monomer a: a compound represented by CH₂=CH-R^{f} (wherein R^{f} is a C₁₋₈ perfluoroalkyl group). Monomer b: a compound having a polymerizable unsaturated group and a cationic group.

## Description

### TECHNICAL FIELD

The present invention relates to water- and oil-proofing composition and a method for its production.

### BACKGROUND ART

Some water- and oil-proofing compositions are known to impart water and oil resistance to substrates such as paper. Water- and oil-proof paper can be obtained by treating pulp or paper with water- and oil-proofing compositions. Water- and oil-proofing compositions are used in treatment of pulp or paper, for example, by impregnating paper with a water- and oil-proofing composition (external addition), or by forming a pulp slurry containing a water- and oil-proofing composition into paper sheet (internal addition).

Water- and oil-proofing compositions comprising a fluorinated polymer comprising units based on a (meth)acrylate having a perfluoroalkyl group are known. However, the ester linkage in units based on the (meth)acrylate easily breaks upon alkaline hydrolysis. Therefore, the water and oil resistance can wane as the fluorinated polymer loses perfluoroalkyl groups that way.

Among fluorinated polymers comprising no units based on a (meth)acrylate having a perfluoroalkyl group, those comprising units based on a (perfluoroalkyl)ethylene are known.

Patent Document 1 discloses a dispersion comprising a fluorinated polymer comprising units based on a (perfluoroalkyl)ethylene and an aqueous medium. The document specifically discloses copolymerization of a (perfluoroalkyl)ethylene with vinyl acetate, vinyl stearate, vinyl pivalate and the like in the Examples.

Patent Document 2 discloses a surface treatment composition comprising a fluorinated polymer comprising units based on a fluoroolefin and units based on a vinyl-containing hydrocarbon. The document discloses a copolymer of (perfluorohexyl)ethylene and vinyl stearate in Example 18.

### PRIOR ART DOCUMENTS

### PATENT DOCUMENTS

Patent Document 1: WO2019/138680
Patent Document 2: WO2013/058333

### DISCLOSURE OF INVENTION

### TECHNICAL PROBLEM

However, the dispersion of Patent Document 1 is not stable enough under highly alkaline conditions (for example, at pH of 10 or above) and can form a precipitate during storage under highly alkaline conditions. Formation of a precipitate can cause a problem, for example, that in the case of internal addition, the insufficiently dispersed fluorinated polymer is unlikely to adhere to the pulp uniformly, and a paper substrate with insufficient water and oil resistance results.

A dispersion of the copolymer of Example 18 of Patent Document 2 in an aqueous medium has a similar problem.

The present invention provides a water- and oil-proofing composition stable under highly alkaline conditions and a method for its production.

### SOLUTION TO PROBLEM

The present invention provides the following aspects.
[1] A water- and oil-proofing composition comprising a fluorinated polymer and an aqueous medium,
   wherein the fluorinated polymer comprises units based on the following monomer a and
   units based on the following monomer b: monomer a: a compound represented by the following formula (1)

      CH₂=CH-R^{f} (1)
   wherein R^{f} is a C₁₋₈ perfluoroalkyl group,
      monomer b: a compound having a polymerizable unsaturated group and a cationic group.
[2] The water- and oil-proofing composition according to [1], wherein R^{f} in the formula (1) is a C₁₋₆ perfluoroalkyl group.
[3] The water- and oil-proofing composition according to [1] or [2], wherein the cationic group in the monomer b is a tertiary amino group or a quaternary ammonium group.
[4] The water- and oil-proofing composition according to any one of [1] to [3], wherein the monomer b has at least two polymerizable unsaturated groups in the molecule.
[5] The water- and oil-proofing composition according to any one of [1] to [4], wherein the ratio of the sum of units based on the monomer a and units based on the monomer b is at least 35.5 mass% relative to all the units constituting the fluorinated polymer.
[6] The water- and oil-proofing composition according to any one of [1] to [5], wherein the ratio of units based on the monomer a is from 35 to 80 mass%, and the ratio of units based on the monomer b is from 0.5 to 10 mass%, relative to all the units constituting the fluorinated polymer.
[7] The water- and oil-proofing composition according to any one of [1] to [6], wherein the fluorinated polymer further comprises units based on the following monomer c:
   monomer c: another monomer copolymerizable with the monomer a and the monomer b which has no cationic groups.
[8] The water- and oil-proofing composition according to [6] or [7], wherein units based on the monomer c include units based on the following monomer c1:
   monomer c1: a fluorine-free nonionic surfactant having a polymerizable unsaturated group.
[9] The water- and oil-proofing composition according to [8], wherein the monomer c1 is a compound represented by the following formula (2):

   CH₂=CR¹-R²-O-R³-H (2)

   wherein R¹ is a hydrogen atom or a methyl group, R² is a C₁₋₆ alkylene group, and R³ is a bivalent group having a polyoxyalkylene chain (having a carbon atom bonded to the neighboring CH₂=CR¹-R²-O-).
[10] The water- and oil-proofing composition according to any one of [1] to [9], wherein the fluorinated polymer has a number average molecular weight of from 10,000 to 100,000.
[11] A method for producing a water- and oil-proofing composition which comprises polymerizing a monomer component in an emulsion comprising an aqueous medium, the monomer component and a polymerization initiator to obtain a water- and oil-proofing composition comprising the aqueous medium and a fluorinated polymer, wherein the monomer component comprises the following monomer a and the following monomer b:
   monomer a: a compound represented by the following formula (1)

      CH₂=CH-R^{f} (1)

      wherein R^{f} is a C₁₋₈ perfluoroalkyl group,
   monomer b: a compound having a polymerizable unsaturated group and a cationic group.
[12] The method for producing a water- and oil-proofing composition according to [11], wherein the ratio of the sum of the monomer a and the monomer b is at least 35.5 mass% relative to the monomer component.
[13] The method for producing a water- and oil-proofing composition according to [11] or [12], wherein the monomer component further comprises the following monomer c:
   monomer c: another monomer copolymerizable with the monomer a and the monomer b which has no cationic groups.
[14] The method for producing a water- and oil-proofing composition according to [13], wherein the ratio of the monomer a is from 35 to 80 mass%, the ratio of the monomer b is from 0.5 to 10 mass%, and the ratio of the monomer c is from 10 to 64.5 mass%, relative to the monomer component.
[15] The method for producing a water- and oil-proofing composition according to [13] or [14], wherein the monomer c includes the following monomer c1:
   monomer c1: a fluorine-free nonionic surfactant having a polymerizable unsaturated group.

### ADVANTAGEOUS EFFECTS OF INVENTION

The water- and oil-proofing composition of the present invention is stable under highly alkaline conditions.

The method for producing a water- and oil-proofing composition of the present invention can produce a water- and oil-proofing composition stable under highly alkaline conditions.

### DESCRIPTION OF EMBODIMENTS

The terms used in the present invention have the following meanings and definitions.

A "unit based on a monomer" is a generic term for an atomic group derived from 1 molecule of the monomer by polymerization directly, or by polymerization and subsequent partial chemical modification.

A "(meth)acrylate" is a generic term for an acrylate and a methacrylate. Similarly, "(meth)acryloyl" is a generic term for acryloyl and methacryloyl.

The number average molecular weight (hereinafter referred to as "Mn") and mass average molecular weight (hereinafter referred to as "Mw") of a polymer are polymethyl methacrylate equivalent molecular weights measured by gel permeation chromatography (hereinafter referred to as "GPC") from a calibration curve obtained using polymethyl methacrylate standards.

A solid content is calculated as (solid mass / sample mass) × 100, wherein the sample mass is the mass of a sample before heating, and the solid mass is the mass of the sample after 4 hours of heating at 120°C in a convection dryer.

A numerical range expressed by using "to" includes the figures before and after "to" as the lower limit and the upper limit.

### [Water- and Oil-Proofing Composition]

The water- and oil-proofing composition of the present invention (hereinafter referred to as "the present composition") comprises a specific fluorinated polymer (hereinafter referred to as "polymer A") and an aqueous medium.

The present composition may comprise a surfactant, if necessary.

The present composition may comprise additional components, if necessary.

The present composition means both a dispersion obtained by the method of the present invention for producing a water- and oil-proofing composition, which will be described later, and a dispersion obtained by diluting the dispersion with any aqueous medium before treatment of an article.

### (Polymer A)

The polymer A comprises units (hereinafter referred to as "units a") based on a monomer a and units (hereinafter referred to as "units b") based on a monomer b:
monomer a: a compound represented by the following formula (1)

   CH₂=CH-R^{f} (1)

   wherein R^{f} is a C₁₋₈ perfluoroalkyl group,
monomer b: a compound having a polymerizable unsaturated group and a cationic group.

The polymer A may further comprise units (hereinafter referred to as "units c") based on a monomer c:
monomer c: another monomer copolymerizable with the monomer a and the monomer b.

R^{f} in the monomer a preferably has from 1 to 6 carbon atoms, more preferably from 4 to 6 carbon atoms, particularly preferably 6 carbon atoms, in view of high conversion rate to the polymer A, availability of the raw materials and ease of handling.
R^{f} is preferably linear.

As the monomer a, for example, CH₂=CH-CF₃, CH₂=CH-CF₂CF₃, CH₂=CH-CF₂CF₂CF₃, CH₂=CH-CF(CF₃)₂, CH₂=CH-(CF₂)₃CF₃, CH₂=CH-CF₂CF(CF₃)₂, CH₂=CH-C(CF₃)₃, CH₂=CH-(CF₂)₄CF₃, CH₂=CH-CF₂CF₂CF(CF₃)₂, CH₂=CH-(CF₂)₅CF₃, CH₂=CH-(CF₂)₅CF(CF₃)₂ and CH₂=CH-(CF₂)₇CF₃ may be mentioned.

As the monomer a, CH₂=CH-CF₃, CH₂=CH-CF₂CF₃, CH₂=CH-CF(CF₃)₂, CH₂=CH-(CF₂)₃CF₃ and CH₂=CH-(CF₂)₅CF₃ are preferred, CH₂=CH-CF₃, CH₂=CH-CF₂CF₃, CH₂=CH-(CF₂)₃CF₃ and CH₂=CH-(CF₂)₅CF₃ are more preferred, and CH₂=CH-(CF₂)₃CF₃ and CH₂=CH-(CF₂)₅CF₃ are further preferred.

Two or more monomers a may be used in combination.

As the polymerizable unsaturated group in the monomer b, for example, a vinyl group, an allyl group, an allyloxyl group, a (meth)acryloyl group and a (meth)acrylamido group may be mentioned. An allyl group is preferred because such a monomer b easily copolymerize with the monomer a and is easily available at low prices.

The number of polymerizable unsaturated groups in one molecule of the monomer b may be 1, but is preferably at least two in order to attain higher water resistance. The number of polymerizable unsaturated groups in one molecule of the monomer b is preferably at most four in view of formation of a uniform dispersion.

The cationic group in the monomer b improves the stability of the present composition under highly alkaline conditions. The cationic group in the monomer b also covers a group which turns cationic when an acid is added to a dispersion comprising the polymer A or when the pH of the present composition is adjusted.

The cationic group may, for example, be a primary amino group, a secondary amino group, a tertiary amino group or a quaternary ammonium group. A tertiary amino group can turn into a quaternary ammonium cation by such an operation as mentioned above. The cationic group is preferably a tertiary amino group or a quaternary ammonium group for their excellent stabilizing effect under highly alkaline conditions. Namely, the monomer b is preferred to have a tertiary amino group or a quaternary ammonium group.

Examples of the monomer b include compounds containing an allyl group such as those represented by the following formulae (3), (4), (5) and (6); compounds having an allyloxy group such as N-(3-allyloxy-2-hydroxypropyl)dimethylamine, N-(3-allyloxy-2-hydroxypropyl)trimethylammonium chloride and N-(4-allyloxy-3-hydroxybutyl)diethylamine; and compounds having a (meth)acryloyl group such as trimethyl(methacrylamido)ammonium chloride, trimethyl(3-acrylamido-3-dimethylpropyl)ammonium chloride, 3-acrylamidopropyltrimethylammonium chloride, 3-methacrylamidopropyltrimethylammonium chloride, N,N-dimethylaminoethyl (meth)acrylate and N,N-diethylaminoethyl (meth)acrylate.

[CH₂=CHCH₂-N⁺(R⁶)(R⁷)(R⁸)]·Z⁻ (3)

[(CH₂=CHCH₂-)₂N⁺(R⁶)(R^{7.})]·Z⁻ (4)

[(CH₂=CHCH₂-)₃N⁺R⁶]·Z⁻ (5)

[(CH₂=CHCH₂-)₄N⁺]·Z⁻ (6)

wherein R⁶ is a monovalent organic group having a carbon atom bonded to the neighboring CH₂=CHCH₂-N⁺, (CH₂=CHCH₂-)₂N⁺ or (CH₂=CHCH₂-)₃N⁺ or a hydrogen atom, R⁷ is a monovalent organic group having a carbon atom bonded to the neighboring CH₂=CHCH₂-N⁺ or (CH₂=CHCH₂-)₂N⁺, R⁸ is a monovalent organic group having a carbon atom bonded to the neighboring CH₂=CHCH₂-N⁺, and Z⁻ is a counter ion.

The organic group as R⁶, R⁷ or R⁸ may, for example, be an alkyl group, a cycloalkyl group or an aryl group, each of which may have a substituent.

The alkyl group preferably has from 1 to 18 carbon atoms, more preferably from 1 to 6 carbon atoms, further preferably 1 or 2 carbon atoms. As the alkyl group, for example, a methyl group, an ethyl group, a n-propyl group, an isopropyl group, a n-butyl group, a t-butyl group, a n-pentyl group, a n-hexyl group, a n-octyl group, a n-dodecyl group (a lauryl group) or a n-octadecyl group (a stearyl group) may be mentioned.

The alkyl group may have a substituent such as a C₁₋₃ alkoxy group or an aryl group. Examples of substituted alkyl groups include a methoxyethyl group, a methoxypropyl group, an ethoxyethyl group, a benzyl group and a phenylethyl group. The number of ring-constituting carbon atoms in the cycloalkyl group is, for example, from 3 to 8. The cycloalkyl group may have a substituent such as a C₁₋₃ alkyl group or a C₁₋₃ alkoxy group.

The aryl group may, for example, be a phenyl group. The aryl group may have a substituent such as a C₁₋₃ alkyl group or a C₁₋₃ alkoxy group.

Each of R⁶, R⁷ and R⁸ is preferably an alkyl group.

As Z⁻ for example, a halide ion (such as a fluoride ion, a chloride ion, a bromide ion or an iodide ion), a hydroxide ion, or an organic or inorganic acid anion (such as a sulfate ion, a nitrate ion, a phosphate ion, a formate ion, an acetate ion or an oxalate ion) may, for example, be mentioned.

Compounds represented by the formula (3) include allyldimethylamine hydrochloride, allyltrimethylammoium chloride, allyldiethylamine hydrochloride, allyldimethylamine hydrobromide, allyldimethylamine sulfate, allyldimethylamine nitrate, allyllaurylamine hydrochloride, allylstearylamine hydrochloride, allyldibutylamine hydrochloride, allyltrioctylammonium chloride, allyltrioctadecylammonium chloride, allyldibenzylamine hydrochloride, allyldicyclohexylamine hydrochloride, allyltricyclohexylammonium chloride and the like.

Compounds represented by the formula (4) include diallyldimethylammonium chloride, diallyldiethylammonium chloride, diallyldimethylammonium bromide, diallyldimethylammonium sulfate, diallyldimethylammonium nitrate, diallyldioctylammonium chloride, diallyldioctadecylammonium chloride, diallylbenzylamine hydrochloride, diallylcyclohexylamine hydrochloride, diallyldicyclohexylammonium chloride, diallyldioctadecylammonium bromide, diallyldioctadecylammonium sulfate, diallyldioctadecylammonium nitrate and the like.

Compounds represented by the formula (5) include triallylamine hydrochloride, triallylmethylammonium chloride, triallylethylammonium chloride, triallylmethylammonium bromide, triallylmethylammonium sulfate, triallylmethylammonium nitrate, triallyldodecylammonium chloride, triallyloctadecylammonium chloride, triallyldodecylammonium bromide, triallylodecylammonium sulfate, triallyldodecylammonium nitrate and the like.

Compounds represented by the formula (6) include tetraallylammonium chloride, tetraallylammonium sulfate, tetraallylammonium nitrate, tetraallylammonium acetate, tetraallylammonium oxalate and the like.

Among those mentioned above, the monomer b is preferably a compound represented by the formula (4) for its availability at low prices, and more preferably a compound represented by the formula (4) wherein R⁶ and R⁷ are alkyl groups.

Two or more monomers b may be used in combination.

The monomer c is another monomer copolymerizable with the monomer a and the monomer b and has no cationic groups.

A preferred example of the monomer c is the monomer c1 mentioned below. When the polymer A comprises units based on a monomer c, the present composition can provide water- and oil-proof paper having higher water and oil resistance.
monomer c1: a fluorine-free nonionic surfactant having a polymerizable unsaturated group.

The monomer c1 may be any compound that has a polymerizable unsaturated group and functions as a fluorine-free nonionic surfactant.

As the polymerizable unsaturated group in the monomer c1, those mentioned previously may be mentioned.

The monomer c1 preferably has an HLB (Hydrophilic-Lipophilic Balance) value of from 11 to 18, more preferably from 12 to 17.

The HLB value is measured by Griffin's method.

The monomer c1 may, for example, be a compound having a polymerizable unsaturated group and a polyoxyalkylene (hereinafter referred to as "POA") chain.

The POA chain is represented as -(AO)ₘ- wherein AO is an oxyalkylene group, and m is an integer of at least 2. Each AO in -(AO)ₘ- may be the same or different.

Each oxyalkylene group represented as AO preferably has from 2 to 6 carbon atoms and is preferably an oxyethylene group, an oxypropylene group, an oxybutylene group or an oxytetramethylene group.
m is preferably from 2 to 80, more preferably from 3 to 60 in order to bring the HLB value of the monomer c within an appropriate range.

When the POA chain comprises two or more kinds of AO containing different numbers of carbon atoms, the AO's may be bonded in any order in blocks or randomly. For example, when the POA chain consists of oxyethylene groups and oxypropylene groups, the oxyethylene groups and the oxypropylene groups may be arranged randomly, alternately or into at least one oxyethylene block and at least one oxypropylene block bonded together.

When the POA chain comprises two or more kinds of AO, preferred AO combinations are the combination of oxyethylene groups and oxypropylene groups, the combination of oxyethylene groups and oxybutylene groups and the combination of oxyethylene groups and oxytetramethylene groups.

The monomer c1 is preferably a compound represented by the following formula (2) for its high copolymerizability with the monomer a.

CH₂=CR¹-R²-O-R³-H (2)

wherein R¹ is a hydrogen atom or a methyl group, R² is a C₁₋₆ alkylene group, and R³ is a bivalent group containing a POA chain (which has a carbon atom bonded to the neighboring CH₂=CR¹-R²-O-).

R² preferably comprises two or three carbon atoms. R² is preferably linear.

The POA chain in R³ is the same as described above. It is preferred that R³ itself is a POA chain. Two or more monomers c1 may be used in combination.

Another preferred example of the monomer c is the monomer c2 mentioned below. The monomer c2 copolymerizes well with the monomer a. The monomer c1 and the monomer c2 may be used in combination.
monomer c2: a compound represented by CH₂=CH-Q or CH₂=CHCH₂-Q wherein Q is an organic group having an oxygen, nitrogen or sulfur atom bonded to the neighboring CH₂=CH- or CH₂=CHCH₂-, or a halogen atom.

The organic group having an oxygen, nitrogen or sulfur atom bonded to the neighboring CH₂=CH- or CH₂=CHCH₂- may, for example, be -OR⁴, -OC(=O)R⁴, -SR⁴ or a nitrogen-containing heterocyclic group containing a ring-constituting nitrogen atom bonded to the neighboring CH₂=CH- or CH₂=CHCH₂-, wherein R⁴ is an alkyl group, a cycloalkyl group, an aryl group or a heterocyclic group. The alkyl group comprises, for example, from 1 to 22 carbon atoms. The cycloalkyl group comprises, for example, from 3 to 8 ring-constituting carbon atoms. The heterocyclic atoms comprises, for example, from 3 to 8 ring-constituting atoms.

The organic group as Q may comprise a reactive group such as a hydroxy group, a carboxy group or an amido group or a halogen atom, and may comprise a linking group such as an ethereal oxygen atom a carbonyloxy group or a carbonyl group, which is not bonded to CH₂=CH- or CH₂=CHCH₂-. It may further comprise a polymerizable carbon-carbon double bond. The reactive group is preferably a hydroxy group, and it is preferred that the organic group has no polymerizable carbon-carbon double bonds.

The compound represented by CH₂=CH-Q is preferably a vinyl carboxylate, a vinyl ether or a vinyl halide.

The compound represented by CH₂=CHCH₂-Q is preferably an allyl carboxylate, an allyl ether or an allyl halide.

The acyl group in the vinyl carboxylate or the allyl carboxylate preferably has at most 24 carbon atoms, more preferably from 2 to 6 carbon atoms. It is also preferred to use a vinyl or allyl carboxylate having a C₂₋₆ acyl group and a vinyl or allyl carboxylate having a C₁₀₋₂₂ acyl group in combination.

The alkyl or hydroxyalkyl in the alkyl vinyl ether, the hydroxyalkyl vinyl ether, the alkyl allyl ether and the hydroxyalkyl allyl ether preferably has from 2 to 6 carbon atoms.

The vinyl carboxylate may, for example, be vinyl acetate, vinyl butyrate, vinyl pivalate, vinyl caproate, vinyl caprylate, vinyl laurate, vinyl stearate, vinyl benzoate, vinyl chloroacetate or divinyl adipate. The vinyl carboxylate is preferably vinyl acetate in view of production of an article with good oil resistance.

The vinyl ether is preferably an alkyl vinyl ether or a hydroxyalkyl vinyl ether, and for example, methyl vinyl ether, ethyl vinyl ether, n-butyl vinyl ether, iso-butyl vinyl ether, tert-butyl vinyl ether, 2-hydroxyethyl vinyl ether, 4-hydroxybutyl vinyl ether, stearyl vinyl ether, chloromethyl vinyl ether, 2-chloroethyl vinyl ether, chloropropyl vinyl ether, cyclohexyl vinyl ether, ethylene glycol monovinyl ether and diethylene glycol monovinyl ether may be mentioned.

The allyl carboxylate may, for example be allyl acetate or diallyl adipate.

The allyl ether is preferably an alkyl allyl ether or a hydroxylalkyl allyl ether, such as allyl ethyl ether, diallyl ether, 1,3-diallyloxy-2-propanol and ethylene glycol monoallyl ether.

The vinyl halide may, for example, be vinyl chloride or vinyl fluoride.

The allyl halide may, for example, be allyl chloride or allyl fluoride.

Other examples of the compound represented by CH₂=CH-Q or CH₂=CHCH₂-Q include N-vinylpyrrolidone, N-vinyl-ε-caprolactam and ethyl vinyl sulfide.

The monomer c2 is preferably a vinyl carboxylate, an allyl carboxylate, an alkyl vinyl ether, an alkyl allyl ether, a hydroxyalkyl vinyl ether, a hydroxyalkyl allyl ether, a vinyl halide or an allyl halide, more preferably a vinyl carboxylate or a vinyl halide, in view of copolymerizability with the monomer a and production of an article with high oil resistance.

Specifically speaking, the monomer c2 is preferably vinyl acetate, vinyl butyrate, vinyl pivalate, vinyl caprylate, vinyl laurate, vinyl stearate, vinyl benzoate, vinyl chloroacetate, ethyl vinyl ether, tert-butyl vinyl ether, 4-hydroxybutyl vinyl ether, ethylene glycol monoallyl ether, vinyl chloride or vinyl fluoride, more preferably vinyl acetate, in view of production of an article with high oil resistance.

The polymer A may comprise units based on a monomer c (hereinafter referred to as "monomer c3") other than the monomers c1 and c2, as units c.

The polymer A preferably comprises units based on a monomer c2 (hereinafter referred to as "units c2") only, or units based on the monomer c1 (hereinafter referred to as "units c1") and units c2, as units c. The polymer A may comprise two or more kinds of units c2. When the polymer A comprises units c1, it may comprises two or more kinds of units c1.

The monomer c3 may, for example, be an olefin, a haloolefin other than vinyl halides, an alkyl (meth)acrylate, a hydroxyalkyl (meth)acrylate, a fluoroalkyl (meth)acrylate or a perfluoro(alkyl vinyl ether). Specifically speaking, it may be ethylene, propylene, vinylidene chloride, vinylidene fluoride, tetrafluoroethylene, methyl (meth)acrylate, ethyl (meth)acrylate, stearyl (meth)acrylate, behenyl (meth)acrylate, isobornyl (meth)acrylate, 2-hydroxyethyl (meth)acrylate, 2-[(3,5-dimethylpyrazolyl)carbonylamino]ethyl (meth)acrylate, N-methylolacrylamide, 2-perfluorohexylethyl (meth)acrylate, CF₂=CFOCF₃, CF₂=CFOCF₂CF₃, CF₂=CFOCF₂CF₂CF₃, CF₂=CFOCF₂CF₂CF₂CF₃ or CF₂=CFOCF₂CF(CF₃)OCF₂CF₂CF₃.

The monomer c3 is preferably a (meth)acrylate. However, the polymer A is preferred to comprise no units based on a (meth)acrylate having a perfluoroalkyl group, in view of production of an article with more alkali-resistant water and oil resistance. Therefore, as the monomer c3, preferred is a fluorine-free (meth)acrylate such as methyl (meth)acrylate, n-butyl (meth)acrylate, tert-butyl (meth)acrylate, 2-hydroxyethyl (meth)acrylate, lauryl (meth)acrylate, stearyl (meth)acrylate or behenyl (meth)acrylate. n-Butyl (meth)acrylate and 2-hydroxyethyl (meth)acrylate are preferred for production of a polymer A with a low Tg having good film-forming properties.

The ratio of units a relative to all the units constituting the polymer A is preferably from 35 to 80 mass%, more preferably from 40 to 60 mass%. When the ratio of units a is not lower than the above-mentioned lower limit, the present composition can provide water- and oil-proof paper with higher water and oil resistance. When the ratio of units a is not higher than the above-mentioned upper limit, the conversion rate to the polymer A during the polymerization tends to be high.

All the units constituting the polymer A mean the sum of units a, units b and units c.

The ratio of units b relative to all the units constituting the polymer A is preferably from 0.5 to 10 mass%, more preferably from 1.5 to 8.5 mass%. When the ratio of units b is not lower than the above-mentioned lower limit, the present composition is stabler under highly alkaline conditions. When the ratio of units b is not higher than the above-mentioned upper limit, the conversion rate to the polymer A during the polymerization tends to be high.

The ratio of the sum of units a and units b relative to all the units constituting the polymer A is preferably at least 35.5 mass%, more preferably at least 40 mass%, further preferably at least 50 mass%. When the ratio of the sum of units a and units b is within the above-mentioned range, paper treated with the present composition shows higher oil resistance.

The ratio of units c, if present, relative to all the units constituting the polymer A is preferably from 10 to 64.5 mass%, more preferably from 15 to 60 mass%, further preferably from 20 to 55 mass%. When the ratio of units c is not lower than the above-mentioned lower limit, the conversion rate to the polymer A during the polymerization tends to be high. When the ratio of units c is not higher than the above-mentioned upper limit, higher water and oil resistance is attained.

When units c comprise units c1, the ratio of units c1 relative to all the units constituting the polymer A is preferably from 0.5 to 5 mass%, more preferably from 0.6 to 4 mass%, further preferably from 0.6 to 3 mass%. When the ratio of units c1 is not lower than the above-mentioned lower limit, the present composition can provide water- and oil-proof paper having high water and oil resistance, and the polymer A shows good dispersibility in an emulsion, forming emulsion particles with a proper average diameter. When the ratio of units c1 is not higher than the above-mentioned upper limit, the present composition can provide water- and oil-proof paper having higher water and oil resistance.

When units c comprise units c1, the ratio of units c1 relative to the other units constituting the polymer A is preferably from 0.5 to 5 mass%, more preferably from 0.6 to 4 mass%, further preferably from 0.6 to 3 mass%. When the ratio of units c1 is not lower than the above-mentioned lower limit, the polymer A shows good dispersibility in an emulsion, forming particles with a proper average diameter. When the ratio of units c1 is not higher than the above-mentioned upper limit, the present composition can provide water- and oil-proof paper having higher water and oil resistance.

When units c comprise units c2, the ratio of units c2 relative to all the units constituting the polymer A is preferably from 9 to 64 mass%, more preferably from 30 to 55 mass%, further preferably from 35 to 50 mass%. When the ratio of units c2 is not lower than the above-mentioned lower limit, the conversion rate to the polymer A during the polymerization tends to be high. When the ratio of units c2 is not higher than the above-mentioned upper limit, the present composition can provide water- and oil-proof paper having higher water and oil resistance.

The ratio of units c3 relative to all the units constituting the polymer A is preferably less than 20 mass%, more preferably less than 10 mass%, and may be 0 mass%. When the ratio of units c3 is not higher than the above-mentioned upper limit, water- and oil-proof paper with alkali-resistance water and oil resistance is provided.

The ratios of the respective units can be determined by ¹H-NMR or calculated from the reaction ratios of the respective monomer components measured by gas chromatography. When the conversion rate of the monomer component to the polymer A during production of the polymer A is high (for example, at least 90%), the ratios of the respective units may be calculated from the feed amount of the monomer component.

The conversion rate is calculated from the theoretical mass of a polymer A calculated from the amounts of the raw materials used and the actual mass of the polymer A, as the actual mass / theoretical mass × 100.

The Mn of the polymer A is preferably at least 10,000, more preferably at least 11,000, further preferably at least 12,000. The Mn of the polymer A is preferably at most 100,000, more preferably at most 70,000, further preferably at most 50,000. When the Mn of the polymer A is not lower than the above-mentioned lower limit, the present composition can provide water- and oil-proof paper with higher water and oil resistance. When the Mn of the polymer A is not higher than the above-mentioned upper limit, the polymer A is more dispersible in water.

The Mw of the polymer A is preferably at least 10,000, more preferably at least 20,000, further preferably at least 30,000. The Mw of the polymer A is preferably at most 150,000, more preferably at most 120,000, further preferably at most 100,000. When the Mw of the polymer A is not lower than the above-mentioned lower limit, the present composition can provide water- and oil-proof paper with higher water and oil resistance. When the Mw of the polymer A is not higher than the above-mentioned upper limit, the polymer A is more dispersible in water.

The polymer A is preferably in the form of emulsion particles dispersed in an aqueous medium, which will be described later.

The emulsion particles of the polymer A preferably have an average particle diameter of from 20 to 300 nm, more preferably from 40 to 280 nm, further preferably from 60 to 250 nm. When the average particle diameter is not higher than the above-mentioned upper limit, the polymer A disperses well as emulsion particles. When the average particle diameter is not lower than the above-mentioned lower limit, the emulsion particles of the polymer A are stabler under mechanical shear force.

The average particle diameter of emulsion particles of a polymer is measured with a sample obtained by diluting a water- and oil-proof composition with water to a solid content of 1 mass% by dynamic light scattering, as described in detail later.

The emulsion particles of the polymer A preferably have a zeta potential of from 25 to 100 mV, more preferably from 30 to 90 mV, further preferably from 35 to 80 mV. When the zeta potential is not higher than the above-mentioned upper limit, the particles show good film-forming properties by efficiently adhering to a substrate to be treated. When the zeta potential is not lower than the above-mentioned lower limit, the polymer A disperses well as emulsion particles.

### (Aqueous Medium)

As the aqueous medium, water or water containing a water-miscible organic solvent may be mentioned.

A water-miscible organic solvent is an organic solvent which can be mixed with water in any ratio. The water-miscible organic solvent is preferably at least one species selected from the group consisting of alcohols (other than ether alcohols), ether alcohols and aprotic polar solvents. As the alcohols, t-butanol and propylene glycol may, for example, be mentioned. As the ether alcohols, 3-methoxymethylbutanol, dipropylene glycol, dipropylene glycol monomethyl ether and tripropylene glycol may, for example, be mentioned. As the aprotic polar solvents, N,N-dimethylformamide, dimethyl sulfoxide, tetrahydrofuran (hereinafter referred to as "THF"), acetonitrile, acetone, 3-methoxy-N,N-dimethylpropanamide, 3-butoxy-N,N-dimethylpropanamide, 3-methoxy-3-methyl-1-butanol, triethylene glycol dimethyl ether and tetraethylene glycol dimethyl ether may, for example, be mentioned. When the liquid medium is an aqueous medium, the water-miscible organic solvent is preferably an ether alcohol, more preferably dipropylene glycol, tripropylene glycol or dipropylene glycol monomethyl ether, because the resulting aqueous medium shows high compatibility with the polymer A and thereby facilitates formation of a uniform coating on an article.

When the aqueous medium is water containing a water-miscible organic solvent, the amount of the water-miscible organic solvent is preferably from 1 to 80 parts by mass, more preferably from 5 to 60 parts by mass, per 100 parts by mass of water.

### (Surfactant)

The surfactant is preferably a surfactant having no fluorine atoms.

The surfactant may be an anionic surfactant, a nonionic surfactant, a cationic surfactant or an amphoteric surfactant.

Examples of nonionic surfactants include surfactants s1 to s6 described in paragraphs [0067] to [0095] of JP-A-2009-215370.

As the surfactant s1, a polyoxyethylene alkyl ether is preferred.

As the surfactant s2, acetylene glycol ethylene oxide adduct is preferred. As the surfactant s3, a polymerization product of ethylene oxide and propylene oxide is preferred.

Two or more nonionic surfactants may be used in combination.

Examples of cationic surfactants include surfactant s7 described in paragraphs [0096] to [0100] of JP-A-2009-215370.

The surfactant s7 is preferably an ammonium salt having at least one alkyl group, alkenyl group or hydroxyl-terminated polyoxyalkylene chain on the nitrogen atom, instead of hydrogen atom(s), and is more preferably a compound s71 represented by the following formula (s71).

[(R²¹)₄N+]X⁻ (s71)

wherein R²¹ is a hydrogen atom, a C₁₋₂₂ alkyl group, a C₂₋₂₂ alkenyl group, a C₁₋₉ fluoroalkyl group or a hydroxy-terminated polyoxyalkylene chain, provided that not all of the four R²¹'s, which may be the same or different, are hydrogen atoms, and X⁻ is a counter ion.

X- is preferably a chloride ion, an ethyl sulfate ion or an acetate ion.

Examples of the compound s71 include monostearyltrimethylammonium chloride, monostearyldimethylmonoethylammonium ethyl sulfate, mono(stearyl)monomethyldi(polyethylene glycol)ammonium chloride, monofluorohexyltrimethylammonium chloride, di(beef tallow alkyl)dimethylammonium chloride and dimethylmonococonutamine acetate.

Two or more cationic surfactants may be used in combination.

Examples of amphoteric surfactants include surfactant s8 described in paragraphs [0101] to [0102] of JP-A-2009-215370. A single species may be used, or two or more species may be used in combination.

### (Additional Components)

Additional components may be added to a dispersion obtained by the method of the present invention for producing a water- and oil-proofing composition, which will be described later, by polymerizing a monomer component in an emulsion comprising an aqueous medium, the monomer component and a polymerization initiator, directly or after dilution of the dispersion.

Examples of additional components to be added to a dispersion obtained by the method of the present invention for producing a water- and oil-proofing composition include a resin other than the polymer A, glue, a crosslinking agent, a catalyst, an organic filler, an inorganic filler, a supporting agent, a moisturizing agent, a flocculant, a buffer, a bactericide, a biocide, a sequestering agent, a hydrophobizing agent, a surfactant, a defoamer and a volatile organic solvent.

Examples of additional components to be added after dilution of the dispersion include additives to be used in the external addition process described later, such as a paper strength additive (such as starches and resins), a sizing agent, a penetrant, a defoamer, a chelating agent, a dye, a pigment, a dye, a binder, an acid, an alkali, an alginate and aluminum sulfate, and additives to be used in the internal addition process described later, such as a coagulant, a retention aid, a sizing agent, a paper strength agent, a pigment, a dye and a pH adjuster.

Two or more additional components may be used.

It is possible to add the same component or different components having the same function to a dispersion obtained by the method for producing a water- and oil-proofing composition before and after the dispersion is diluted for treatment for treatment of a substrate. Examples of the additional components are not limited to those mentioned above.

Incorporation of a crosslinking agent into the present composition tends to improve the adhesion to a substrate.

The crosslinking agent is preferably an isocyanate crosslinking agent, a methylol crosslinking agent, a carbodiimide crosslinking agent or an oxazoline crosslinking agent.

As the isocyanate crosslinking agents, for example, blocked type aromatic isocyanate crosslinking agents, blocked type aliphatic isocyanate crosslinking agents, non-blocked type aromatic isocyanate crosslinking agents and non-blocked type aliphatic isocyanate crosslinking agents may be mentioned. Isocyanate crosslinking agents which are in the form of an aqueous dispersion containing a surfactant as an emulsifier or inherently water-dispersible isocyanate crosslinking agents having a hydrophilic group are preferred.

As the methylol crosslinking agent, condensates or precondensates of urea or melamine with formaldehyde, methylol-dihydroxyethylene-urea and derivatives thereof, methylol-ethylene-urea, methylol-propylene-urea, methylol-triazone, dicyandiamide-formaldehyde condensates and methylol-carbamate, methylol-(meth)acrylamide, and polymers thereof may, for example, be mentioned.

Carbodiimide crosslinking agents are polymers having a carbodiimide group in the molecule and are highly reactive with carboxy groups, amino groups, active hydrogen groups on a substrate or the like.

Oxazoline crosslinking agents are polymers having an oxazoline group in the molecule and are highly reactive with carboxy groups on a substrate or the like.

As other crosslinking agents, for examples, divinyl sulfone, polyamides and their cationic derivatives, polyamines and their cationic derivatives, epoxy derivatives such as diglycidyl glycerol and halide derivatives such as (epoxy-2,3-propyl)trimethylammonium chloride and N-methyl-N-(epoxy-2,3-propyl)morpholinium chloride, ethylene glycol chloromethyl ether pyridinium salt, polyamine-polyamide-epichlorohydrin resins, polyvinyl alcohol and its derivatives, polyacrylamide and its derivatives, glyoxal resin type anticrease agents may be mentioned.

When the present composition contains a methylol crosslinking agent or a glyoxal resin type anticrease agent, it is preferred to incorporate a catalyst in the composition as an additive. The catalyst may, for example, be an inorganic amine or an organic amine. The inorganic amine may, for example, be ammonium chloride. The organic amine may, for example, be an amino alcohol hydrochloride or semicarbazide hydrochloride. The amino alcohol hydrochloride may, for example, be monoethanolamine hydrochloride, diethanolamine hydrochloride, triethanol hydrochloride or 2-amino-2-methylpropanol hydrochloride.

The present composition fulfills preferably at least one of the condition (1) that the polymer A comprises units c1 and the condition (2) the present composition comprises a surfactant which comprises a cationic surfactant, more preferably at least the condition (1).

When the condition (2) is fulfilled, the cationic surfactant may be used in combination with another surfactant, preferably a nonionic surfactant.

### (Ratios of Respective Components)

The content of the aqueous medium may be selected appropriately depending on the desired solid content.

The solid content of the present composition immediately after production of the composition is preferably from 20 to 70 mass%, more preferably from 30 to 60 mass%.

The solid content of the present composition at the time of treatment of an article is preferably from 0.1 to 7 mass%, more preferably from 0.2 to 5 mass%.

The surfactant content of the present composition is preferably at most 20 parts by mass, more preferably at most 10 parts by mass, further preferably at most 5 parts by mass, per 100 parts by mass of the polymer A, and may be 0 part by mass. When the surfactant content is not higher than the above-mentioned upper limit, it is possible to reduce the adverse effect of surfactants on the water and oil resistance of water- and oil-proof paper and the like.

In the present composition, the ratio of the sum of units c1 and the surfactant immediately after production of the present composition is preferably from 1 to 6 parts by mass relative to 100 parts by mass of the other units constituting the polymer A other than units c1. When the ratio of the sum of units c1 and the surfactant is not lower than the above-mentioned lower limit, the present composition is stabler. When the ratio of the sum of units c1 and the surfactant is not higher than the above-mentioned upper limit, the surfactant content of the present composition is likely to be kept to the above-mentioned preferred upper limit or below.

The content of a crosslinking agent in the present composition is preferably from 1 to 50 parts by mass per 100 parts by mass of the polymer A at the time of treatment of a substrate such as paper.

### (Mechanism)

As described above, because the polymer A comprises units a, the present composition can provide water- and oil-proof paper having alkali-resistant water and oil resistance.

Because the polymer A comprises units b, the present composition is stable under highly alkaline conditions (for example, at pH of 10 or above) and is unlikely to form a precipitate during storage under highly alkaline conditions.

### [Method for Producing Water- and Oil-Proofing Composition]

The polymer A in the present composition can be obtained by a conventional polymerization method such as emulsion polymerization, solution polymerization or bulk polymerization. The present composition may also be produced by converting the polymer A obtained by such a polymerization method as mentioned above to its salt by acid treatment and then dispersing the resulting salt of the polymer A in an aqueous medium.

The present composition can be produced, for example, by a method for producing a water- and oil-proofing composition comprising a fluorinated polymer which comprises polymerizing a monomer component in an emulsion comprising an aqueous medium, the monomer component and a polymerization initiator. According to the method, the polymer A is obtained with a high conversion rate of the monomer component to the polymer A and a high number average molecular weight.

The emulsion may comprise a surfactant, if necessary.

The monomer component comprises a monomer a and a monomer b. The monomer component may further comprise a monomer c.

The ratio of the monomer a to the monomer component is preferably from 35 to 80 mass%, more preferably from 40 to 60 mass%. When the ratio of the monomer a is not lower than the above-mentioned lower limit, the present composition can provide water- and oil-proof paper having higher water and oil resistance. When the ratio of the monomer a is not higher than the above-mentioned upper limit, the conversion rate to the polymer A during the polymerization tends to be high.

The ratio of the monomer b to the monomer component is preferably from 0.5 to 10 mass%, more preferably from 1.5 to 8.5 mass%. When the ratio of the monomer b is not lower than the above-mentioned lower limit, the present composition is stabler under highly alkaline conditions. When the ratio of the monomer b is not higher than the above-mentioned upper limit, the conversion rate to the polymer A during the polymerization tends to be high.

The ratio of the sum of the monomer a and the monomer b to the monomer component is preferably at least 35.5 mass%, more preferably at least 40 mass%, further preferably at least 50 mass%. When the ratio of the sum of the monomer a and the monomer b is within the above-mentioned range, paper treated with the present composition shows higher oil resistance.

The ratio of the monomer c, if present, to the monomer component is preferably from 10 to 64.5 mass%, more preferably from 15 to 60 mass%, further preferably from 20 to 55 mass%. When the ratio of the monomer c is not lower than the above-mentioned lower limit, the conversion rate to the polymer A during the polymerization tends to be high. When the ratio of the monomer c is not higher than the above-mentioned upper limit, higher water and oil resistance is attained.

When the monomer c comprises a monomer c1, the ratio of the monomer c1 to the monomer component is preferably from 0.5 to 5 mass%, more preferably from 0.6 to 4 mass%, further preferably from 0.6 to 3 mass%. When the ratio of the monomer c1 is not lower than the above-mentioned lower limit, the present composition can provide water- and oil-proof paper having higher water and oil resistance, and the polymer A shows good dispersibility in an emulsion, forming emulsion particles with a proper average diameter. When the ratio of the monomer c1 is not higher than the above-mentioned upper limit, the present composition can provide water- and oil-proof paper having higher water and oil resistance.

When the monomer c comprises a monomer c1, the ratio of the monomer c1 to the rest of the monomer component is preferably from 0.5 to 5 mass%, more preferably from 0.6 to 4 mass%, further preferably from 0.6 to 3 mass%. When the ratio of the monomer c1 is not lower than the above-mentioned lower limit, the polymer A shows good dispersibility in an emulsion, forming particles with a proper average diameter. When the ratio of the monomer c1 is not higher than the above-mentioned upper limit, the present composition can provide water- and oil-proof paper having higher water and oil resistance.

When the monomer c comprises a monomer c2, the ratio of the monomer c2 to the monomer component is preferably from 9 to 64 mass%, more preferably from 30 to 55 mass%, further preferably from 35 to 50 mass%. When the ratio of the monomer c2 is not lower than the above-mentioned lower limit, the conversion rate to the polymer A during the polymerization tends to be high. When the ratio of the monomer c2 is not higher than the above-mentioned upper limit, the present composition can provide water- and oil-proof paper having higher water and oil resistance.

The ratio of the monomer c3 to the monomer component is preferably less than 20 mass%, more preferably less than 10 mass%, and may be 0 mass%. When the ratio of the monomer c3 is not higher than the above-mentioned upper limit, water- and oil-proof paper with alkali-resistance water and oil resistance is provided.

The polymerization initiator may, for example, be a thermal polymerization initiator, a photopolymerization initiator, a radiation polymerization initiator, a radical polymerization initiator or an ionic polymerization initiator, and is preferably a radical polymerization initiator. As the radical polymerization initiator, for example, an azo type polymerization initiator, a peroxide type polymerization initiator or a redox type initiator is employed depending upon the polymerization temperature. Among them, preferred is an azo type polymerization initiator, and more preferred is a salt of an azo type compound. The polymerization temperature is preferably from 20 to 150°C.

The amount of the polymerization initiator is preferably from 0.1 to 5 parts by mass, more preferably from 0.1 to 3 parts by mass, per 100 parts by mass of the monomer component.

At the time of polymerization of a monomer component, a molecular weight-controlling agent may be employed. The molecular weight-controlling agent is preferably an aromatic compound, a mercaptoalcohol, a mercaptocarboxylic acid or an alkyl mercaptan, more preferably a mercaptocarboxylic acid or an alkyl mercaptan. Examples of the molecular weight-controlling agent include mercaptoethanol, mercaptopropionic acid, n-octyl mercaptan, n-dodecyl mercaptan, tert-dodecyl mercaptan, stearyl mercaptan and a-methylstyrene dimer (CH₂=C(Ph)CH₂C(CH₃)₂Ph wherein Ph is a phenyl group).

The amount of the molecular weight-controlling agent is preferably at most 5 parts by mass, more preferably at most 2 parts by mass, per 100 parts by mass of the monomer component, and may be 0 parts by mass.

The emulsion may be prepared, for example, by emulsifying a mixture comprising an aqueous medium and a monomer component, and, if necessary, a surfactant in a homogenizer, a high-pressure emulsifying machine or the like and adding a polymerization initiator.

The concentration of the monomer component in the emulsion is preferably from 20 to 60 mass%, more preferably from 30 to 50 mass%. When the concentration of the monomer component in the emulsion is within the above-mentioned range, the monomer component polymerizes into a polymer A having a sufficiently high molecular weight with a high conversion rate.

The amount of the surfactant in the emulsion is preferably at most 6 parts by mass per 100 parts by mass of the monomer component, and may be 0 parts by mass. When the amount of the surfactant is not higher than the above-mentioned upper limit, it is possible to reduce the adverse effect of surfactants on the water and oil repellency of an article treated with the present composition.

In the emulsion, the ratio of the sum of the monomer c1 and the surfactant is preferably from 1 to 6 parts by mass, relative to 100 parts by mass of the monomer component exclusive of the monomer c1. When the ratio of the sum of the monomer c1 and the surfactant is not lower than the above-mentioned lower limit, the emulsion shows good dispersion stability. When ratio of the sum of the monomer c1 and the surfactant is not higher than the above-mentioned upper limit, the surfactant content of the present composition is likely to be kept to the above-mentioned preferred upper limit or below.

The dispersion of the polymer A obtained by polymerizing a monomer component in an emulsion may be used as the present composition, by itself or after diluted with an aqueous medium to a certain solid content. Additional components may be added to the present composition.

The conversion rate of the monomer component to the polymer A at completion of the polymerization is preferably at least 80 %, more preferably at least 90%. As the conversion rate increases, the molecular weight of the polymer A increases, and the present composition can provide water- and oil-proof paper with higher water and oil resistance. Because a high conversion rate leads to less damage to polymer performance by remaining monomers and a higher fluorine content of the polymer A, the present composition can impart high water and oil resistance.

It is preferred to optimize the composition of the emulsion and the polymerization time so that a conversion rate of 80% or higher is achieved.

### (Mechanism)

Because a monomer composition comprising a monomer a is polymerized in the method of the present invention described above, the method can produce a water- and oil-proofing composition which can provide water- and oil-proof paper with alkali-resistant water and oil resistance.

Because the monomer composition is polymerized in an emulsion in the method of the present invention, the polymer A is produced with a high molecular weight, and hence, the method can produce a water- and oil-proofing composition which can provide water- and oil-proof paper with high water and oil resistance.

Because the monomer component comprises a monomer b in the method of the present invention described above, the method can produce a water- and oil-proofing composition which is stable under highly alkaline conditions and unlikely to form a precipitate during storage under highly alkaline conditions.

### [Application]

The present composition is used for treatment of an article or production of water- and oil-proof paper.

An article treated with the present composition and water- and oil-proof paper produced by using the present composition show alkaline-resistant water and oil resistance.

### (Treatment of Article)

The article to be treated with the present composition may, for example, be fibers, woven fabrics, knitted fabrics, nonwoven fabrics, glass, paper, wood, leather, synthetic leather, stone, concrete, ceramics, metals, metal oxides, pottery and porcelain, molded resin products, porous resin products and fibrous porous bodies. Porous resin products include, for example, those used as filters. As the materials for porous resin products, polypropylene, polyethylene terephthalate and polytetrafluoroethylene may, for example, be mentioned. As the materials for fibrous porous bodies, glass fibers, cellulose nanofibers, carbon fibers and cellulose acetate may, for example, be mentioned.

The treatment method may, for example, comprise coating an article with the present composition by a conventional coating method or impregnating an article with the present composition, followed by drying.

### (Production of Water- and Oil-Proof Paper)

The present composition can be used to produce water- and oil-proof paper by coating or impregnating a paper substrate with the present composition (external addition process) or by forming a pulp slurry comprising the present composition into a paper sheet (internal addition process).

The present composition may be diluted with water or an aqueous medium before use in the external addition process and the internal addition process.

### <External Addition Process>

The paper substrate may, for example, be produced by beating a pulp slurry in water, if necessary mixing two or more pulp slurries in a certain ratio, adding some agents, and forming the slurry into a sheet on a wire screen. The paper substrate may be in the form of a continuous long web, in the form of a sheet cut from such a web, or in the form of molded pulp (such as a container) produced by a pulp molding machine.

The basis weight of the paper substrate is, for example, from 10 g/m² to 500 g/m².

As examples of the source of pulp, wood (such as coniferous wood and deciduous wood); grass plants such as bagasse, rice straw, bamboo, reed and coconut shell; and waste paper may specifically be mentioned. Pulp from wood and grass plants is called fresh pulp, while pulp from waste paper is called recycled pulp.

Fresh pulp comes in different names depending on the method of production, such as kraft pulp (KP), sulfite pulp (SP), soda pulp, mechanical pulp (MP), thermomechanical pulp (TMP) and chemithermomechanical pulp (CTMP). Fresh pulp may be bleached through one or more bleaching steps, if necessary.

Recycled pulp may be produced by disintegration, cleaning, deinking or bleaching or by a combination thereof.

The paper substrate may contain a sizing agent, a fixing agent, a dry-strength additive, a wet-strength additive, aluminum sulfate, a retention aid, a dye, a pigment, a filler or the like, as long as they do not spoil the effect of the present invention.

The present composition may be applied by coating or impregnation at any stage after sheet forming, at the size press after sheet forming, a wet press and a pre-dryer, or at a coater after the size press.

The present composition may be applied using a coating machine such as a size press machine, a coater or a printing machine. As a size press machine, a two-roll size press machine, a film transfer size press machine, a calender size press machine or the like may be mentioned. As a coater, a roll coater, an air knife coater, a die coater, a blade coater, a bar coater, a bill blade coater, a short dwell blade coater or the like may be mentioned. As a printing machine, a gravure printing machine, a flexographic printing machine, an offset printing machine or the like may be mentioned.

After coating or impregnation with the present composition, the paper substrate is dried. The drying may be carried out by heating or without heating (air drying).

The drying temperature is preferably 20°C or above, and the upper limit of the drying temperature is preferably 300°C, more preferably 250°C.

### <Internal Addition Process>

The pulp slurry is a dispersion of pulp in water.

The pulp is obtained from a similar source to those mentioned previously for external addition process. The pulp slurry may be produced disintegrating dry pulp in a disintegrator, or by diluting wet pulp produced by a pulper. A single pulp slurry may be used alone, or two or more pulp slurries may be used after mixed in a certain ratio.

The concentration of pulp in the pulp slurry is preferably from 0.1 to 10 mass%.

The present composition may be added at any stage before supplying the pulp slurry onto the wire screen in a paper machine.

For forming the pulp slurry into a sheet, a paper machine may be used. The paper machine may be any device designed to drain water from the pulp slurry on a wire screen. The paper machine may be a continuous paper machine such as a Fourdrinier paper machine, a batch type pulp molding machine which drains water from a pulp slurry through a wire screen mold to produce a molded product.

Water- and oil-proof paper produced by using the present composition comprises the polymer A.

The content of the polymer A is preferably from 0.01 to 3.0 g/m², more preferably from 0.1 to 1.5 g/m², per unit area of the water- and oil-proof paper. When the content of the polymer A is not lower than the above-mentioned lower limit, higher water and oil resistance is attained. When the content of the polymer A is not higher than the above-mentioned upper limit, the water- and oil-proof paper is more permeable to air or steam.

The content of the polymer A is calculated from the fluorine content of water- and oil-proof paper determined by the combustion-pyrohydrolysis method.

The fluorine content is preferably from 0.01 to 2.0 g/m², more preferably from 0.3 to 1.0 g/m², in terms of the mass of fluorine atoms per unit area of water- and oil-proof paper. If the fluorine content is not lower than the above-mentioned lower limit, higher water and oil resistance is attained. If the fluorine content is not higher than the above-mentioned upper limit, the water- and oil-proof paper has better permeability to air or steam.

### EXAMPLES

Now, the present invention will be described in further detail with reference to Examples. However, it should be understood that the present invention is by no means restricted thereto.

Room temperature means 25°C±5°C.

Examples 1 to 6 are Examples of the present invention, and Example 7 to 10 are Comparative Examples.

### (Solid Content)

A sample (a fluorinated polymer dispersion) obtained as described later in the Examples was heated at 120°C in a suction oven (a convection dryer) for 4 hours. The solid content (mass%) was calculated by dividing the mass of the solid obtained after the heating (solid mass) by the mass of the sample before the heating.

### (Conversion Rate)

The theoretical solid content of a fluorinated polymer dispersion obtained in each Example was calculated from the feed amounts of raw materials, and the conversion rate from the monomer component to the polymer was calculated from the theoretical solid content and the actual solid content, as the actual value / theoretical value × 100. A conversion rate of 90% or higher was rated as O (good), a conversion rate of not lower than 80% and lower than 90% was rated as Δ (satisfactory), and a conversion rate of lower than 80% was rated as × (unsatisfactory).

### (Composition of Fluorinated Polymer)

The composition of a fluorinated polymer (the ratio of each kind of monomer units to all the units constituting the fluorinated polymer) was calculated from the feed amount of the monomer component.

### (Average Particle Diameter)

A fluorinated polymer dispersion obtained as described later in the Examples was diluted with distilled water passed through a 50-µm filter to a solid content of 1 mass% to prepare a sample. Using the sample, the average particle diameter was determined by dynamic light scattering with a zeta potential & particle size analyzer (product name: ELS-Z, manufactured by OTSUKA ELECTRONICS CO.,LTD.).

### (Zeta Potential)

The zeta potential of the dispersion obtained in each Example was measured by electrophoretic light scattering with a zeta potential & particle size analyzer (product name: ELS-Z, manufactured by OTSUKA ELECTRONICS CO.,LTD.).

### (Average Molecular Weight)

### <Recovery of Fluorinated Polymer>

6 g of a fluorinated polymer dispersion obtained in each Example was added dropwise to 60 g of a mixture of 6 g of hexane and 54 g of 2-butanol under stirring to precipitate a solid. The mixture was centrifuged at 3,000 rpm for 5 minutes, and the solid pellet was separated, then stirred well with 30 g of alcohol denatured with isopropyl alcohol (product name: 95% alcohol denatured with IPA, manufactured by Imazu Chemical) and 30 g of ion-exchanged water, and centrifuged at 3,000 rpm for 5 minutes. The solid pellet was separated from the supernatant and dried in a vacuum at 35°C to recover the fluorinated polymer.

### <Measurement of Mn and Mw>

The recovered fluorinated polymer was dissolved in a mixed medium comprising a fluorine-containing medium (AK-225, manufactured by AGC Inc.) / THF in a volume ratio of 6/4 to make a solution with a solid content of 0.5 mass%, and the solution was passed through a 0.2-µm filter to prepare an analytical sample. The number-average molecular weight (Mn) and the weight-average molecular weight (Mw) were measured by GPC of the analytical sample under the following conditions.
Instrument: HLC-8320 GPC manufactured by Tosoh Corporation,
Column: MIXED-C manufactured by Polymer laboratories, 300 × 7.5 mm 5 µm,
Mobile phase: mixed medium comprising AK-225/THF = 6/4 (volume ratio),
Flow rate: 1.0 mL/min,
Oven temperature: 37°C ,
Sample concentration: 1.0 mass%,
Injection volume: 50 µL,
Detector: RI (refractive index detector) and
Standard sample: polymethyl methacrylate (Mn = 2,136,000, 955,000, 569,000, 332,800, 121,600, 67,400, 31,110, 13,300, 7,360, 1,950, 1,010, and 550).

### (Stability of Fluorinated Polymer Dispersion: Buffer)

5 g of a fluorinated polymer dispersion obtained as described later in the Examples was added to 35 g of carbonate pH standard solution, pH 10.1 (manufactured by KANTO KAGAKU Co., INC.) to prepare a test solution. After 3 hours of standing, the test solution was examined with the naked eye for precipitate particles. A test solution containing no precipitate particles was rated as "O", a test solution containing a countable number of precipitate particles was rated as "Δ", a test solution containing a countless precipitate particles was rated as "×".

### (Stability of Fluorinated Polymer Dispersion: Aqueous NaOH)

5 g of a fluorinated polymer dispersion obtained as described later in the Examples was added to 0.1 N aqueous NaOH (pH 13) to prepare a test solution. After 3 hours of standing, the test solution was examined with the naked eye for precipitate particles. A test solution containing no precipitate particles was rated as "O", a test solution containing a countable number of precipitate particles was rated as "Δ", a test solution containing countless precipitate particles was rated as "×".

### (Oil Resistance: Kit Test)

Treated paper was tested for oil resistance by the following method (the kit test) in accordance with TAPPI KIT-559cm-02, using test solutions (kit reagents) prepared by mixing castor oil, toluene and heptane in the volume ratios shown in Table 1.

Test paper was laid on a flat, clean and black plane, and one droplet of each test solution, in order of decreasing kit number, was dropped from a height of 13 mm onto the test paper. After 15 seconds, the droplet of the test solution was removed with clean blotting paper, and the surface of the area of the test paper which had been in contact with the test solution was examined with the naked eye. The kit number of the highest numbered test solution that left no stain on the paper was used as the rating for the oil resistance of the paper. A higher number implies better oil resistance. Oil resistance is preferably at least 5.

**[Table 1]**

| | Mixing Ratio (vol%) | | |
|---|---|---|---|
| No. | Castor oil | Toluene | n-Heptane |
| 1 | 100 | 0 | 0 |
| 2 | 90 | 5 | 5 |
| 3 | 80 | 10 | 10 |
| 4 | 70 | 15 | 15 |
| 5 | 60 | 20 | 20 |
| 6 | 50 | 25 | 25 |
| 7 | 40 | 30 | 30 |
| 8 | 30 | 35 | 35 |
| 9 | 20 | 40 | 40 |
| 10 | 10 | 45 | 45 |
| 11 | 0 | 50 | 50 |
| 12 | 0 | 45 | 55 |

### (Oil Resistance: Soybean Oil Test)

About 0.5 mL of soybean oil was dropped onto a 5 cm × 5 cm test paper, and the test paper was kept in an environmental test chamber at 60°C for 1 hour. After it was taken out of the environmental test chamber, the soybean oil was blotted from the test paper, and the test paper was examined with the naked eye for penetration of soybean oil and rated on the 6-point scale shown in Table 2. This test uses a common edible plant oil to evaluate oil resistance under conditions of practical use.

**[Table 2]**

| No. | Penetration |
|---|---|
| 0 | A stain spreading the entire surface of the test paper. |
| 1 | A stain spreading half or more of the surface of the test paper. |
| 2 | A stain in the same shape as the contact area between the oil and the test paper |
| 3 | A patchy stain |
| 4 | A tiny stain |
| 5 | No stains |

The following raw materials were used in the Examples described later.
(Monomer a)
   C6OLF: CH₂=CH-(CF₂)₅CF₃ (manufactured by Tokyo Chemical Industry Co., Ltd.)
(Monomer b)
   DADMAC: 60 mass% aqueous diallyldimethylammonium chloride (manufactured by Tokyo Chemical Industry Co., Ltd.)
(Monomer c)
   VAC: vinyl acetate (manufactured by Tokyo Chemical Industry Co., Ltd.)
   NVP: N-vinyl-2-pyrrolidone (manufactured by Tokyo Chemical Industry Co., Ltd.)
   R450: 10 mass% aqueous solution of polyoxyalkylene alkenyl ether represented by the following formula (2-1) (manufactured by Kao Corporation under the product name of LATEMUL PD-450, HLB 16.2)

      CH₂=C(CH₃)-CH₂CH₂O-[(A¹O)ₘ₁(A²O)ₘ₂]-H 2-1
wherein A¹O and A²O are oxyalkylene groups which are different from each other, and m1+m2 is an integer of from 3 to 30. Each of A¹O and A²O is an oxyalkylene group selected from an oxyethylene group, an oxypropylene group, an oxybutylene group and an oxytetramethylene group, and A¹O and A²O may be arranged randomly, alternately or in blocks. When two or more A¹O^{'}s and two or more A²O's are present, the A¹O's and the A²O's may be arranged randomly, alternately or in blocks. The HLB of a compound represented by the formula (3) can be controlled by the kinds and amounts of the oxyalkylene groups in one molecule.

### (Surfactants)

### <Nonionic Surfactants>

E430: 10 mass% aqueous solution of polyoxyethylene oleyl ether (adduct with about 30 moles of ethylene oxide, EMULGEN 430, manufactured by Kao Corporation)
P204: 10 mass% aqueous solution of ethylene oxide-propylene oxide polymer (containing 40 mass% of oxyethylene, and a polypropylene glycol block having an average molecular weight of 2,000, manufactured by NOF Corporation under the product name of Pronon #204)
E120: 10 mass% aqueous solution of polyoxyethylene lauryl ether (adduct with about 12 moles of ethylene oxide, manufactured by Kao Corporation under the product name of EMULGEN 120)
P104: 10 mass% aqueous solution of ethylene oxide-propylene oxide polymer (containing 40 mass% of oxyethylene and a polypropylene glycol block having an average molecular weight of 1,000, manufactured by NOF Corporation under the product name of Pronon #104)

### <Cationic Surfactant>

AQ1863: 63 mass% solution of monostearyltrimethylammonium chloride in water and isopropyl alcohol (LIPOQUAD 18-63 manufactured by of Lion Specialty Chemicals Co., Ltd.), diluted to a monostearyltrimethylammonium chloride concentration of 10 mass%

### (Media)

Water: ion-exchanged water
DPG: dipropylene glycol (Polymerization Initiator)
VA-061A: a 1:1 (mass ratio) mixture of 2,2'-azobis[2-(2-imidazolin-2-yl)propane] (VA-061, manufactured by FUJIFILM Wako Pure Chemical Corporation) and 80 mass% aqueous acetic acid

### (EXAMPLE 1)

### <Preparation of Fluorinated Polymer Dispersion>

In a 30 mL vial, 4.9 g of C6OLF, 4.4 g of VAC, 0.8 g of DADMAC, 1.0 g of E430, 0.5 g of P204, 5.8 g of water, and 1.7 g of DPG were put to obtain a liquid mixture. The liquid mixture was stirred by means of a homogenizer to obtain an emulsion. The emulsion was entirely transferred to a 100 mL ampoule, and 1.0 g of VA061A was added. The gas phase in the ampoule was replaced by nitrogen, and polymerization was carried out at 45°C for 72 hours to obtain a fluorinated polymer dispersion. The solid content of the fluorinated polymer dispersion obtained, the conversion rate, the molecular weight, the average particle diameter and the zeta potential are shown in Table 3.

### <Preparation of Treating Solution>

The fluorinated polymer dispersion obtained was diluted with water to obtain a treating solution with a solid content of about 2 mass%.

### <Treatment of Paper>

The treating solution was applied to bleached non-sized paper having a basis weight of 40 g/m² by means of a size press and dried at 105°C for 60 seconds in such an amount that the fluorinated polymer content per unit area of the treated paper (test paper) was about 0.53 g/m², to obtain a test paper.

### (EXAMPLES 2 TO 10)

Fluorinated polymer dispersions and treating solutions were obtained in the same manner as in Example 1 except that the raw materials shown in Table 3 were used. The solid contents of the fluorinated polymer dispersions obtained, the conversion rates, the molecular weights, the average particle diameters and the zeta potentials are shown in Table 3.

The composition of the fluorinated polymer obtained in each Example, whether a cationic surfactant was added or not at the time of production of fluorinated polymer dispersions and the amounts thereof, the results of evaluation of the fluorinated polymer dispersions and oil resistance of test papers are shown in Table 4.

**[Table 3]**

| | | | | Solid content [mass%] | Ex. 1 | Ex. 2 | Ex. 3 | Ex. 4 | Ex. 5 | Ex. 6 | Ex. 7 | Ex. 8 | Ex. 9 | Ex. 10 |
|---|---|---|---|---|---|---|---|---|---|---|---|---|---|---|
| Amount [g] | Monomer | a | C60LF | 100 | 4.9 | 4.9 | 4.9 | 5.0 | 4.9 | 4.9 | 4.9 | 7.1 | 6.4 | 4.9 |
| | | b | DADMAC | 60 | 0.8 | 0.8 | 0.8 | 0.9 | 0.8 | 0.8 | - | - | - | - |
| | | c | VAC | 100 | 4.4 | 3.9 | 4.3 | 3.9 | 4.3 | 3.9 | 4.9 | 2.7 | 3.3 | 4.9 |
| | | | NVP | 100 | - | 0.5 | - | 0.5 | - | 0.5 | - | - | - | - |
| | | | R450 | 10 | - | - | - | - | 1.5 | 1.5 | - | - | - | 1.5 |
| | Surfactant | | E430 | 10 | 1.0 | 1.0 | 1.0 | 1.0 | - | - | 1.0 | - | 1.0 | - |
| | | | P204 | 10 | 0.5 | 0.5 | 0.5 | 0.5 | - | - | 0.5 | - | 0.5 | - |
| | | | AQ1863 | 10 | - | - | 0.3 | 0.3 | - | - | - | - | 0.2 | - |
| | | | E120 | 10 | - | - | - | - | - | - | - | 0.73 | - | - |
| | | | P104 | 10 | - | - | - | - | - | - | - | 0.49 | - | - |
| | Medium | | Water | 100 | 5.8 | 5.8 | 5.6 | 5.5 | 5.8 | 5.8 | 6.1 | 6.1 | 5.9 | 6.1 |
| | | | DPG | 100 | 1.7 | 1.7 | 1.7 | 1.7 | 1.7 | 1.7 | 1.7 | 2.0 | 1.7 | 1.7 |
| | Polymerization initiator | | VA061A | 10 | 1.0 | 1.0 | 1.0 | 1.0 | 1.0 | 1.0 | 1.0 | 1.0 | 1.0 | 1.0 |
| Amount per 100 parts by mass of monomer a + monomer b + monomer c [parts by mass] | | | Monomer a | - | 50 | 50 | 50 | 50 | 49.3 | 49.3 | 50 | 72.5 | 50 | 49.3 |
| | | | Monomer b | - | 5 | 5 | 5 | 5 | 4.9 | 4.9 | - | - | - | - |
| | | | Monomer c | - | 45 | 45 | 45 | 45 | 45.8 | 45.8 | 50 | 27.5 | 50 | 50.7 |
| Results of polymerization | Solid content | | [mass%] | - | 49 | 50 | 49 | 48 | 51 | 51 | 46 | 40 | 47 | 47 |
| | Conversion rate | | | - | ○ | ○ | ○ | ○ | ○ | ○ | ○ | Δ | ○ | ○ |
| | Average particle diameter | | [nm ] | - | 182 | 243 | 202 | 197 | 174 | 188 | 169 | 165 | 158 | 139 |
| | Zeta potential | | [mV] | - | 37.5 | 31.7 | 38.8 | 32.4 | 38.7 | 30.7 | 34.3 | 39.7 | 37.5 | 26.7 |
| | Mn | | | - | 42,000 | 22,000 | 44,000 | 25.000 | 41,000 | 23,000 | 32,000 | 28,000 | 38,000 | 29,000 |
| | Mw | | | - | 57,960 | 26,620 | 58,080 | 37,500 | 56,170 | 26,680 | 47,000 | 41,000 | 61,000 | 38,000 |

**[Table 4]**

| | | | Ex. 1 | Ex. 2 | Ex. 3 | Ex. 4 | Ex. 5 | Ex. 6 | Ex. 7 | Ex. 8 | Ex. 9 | Ex. 10 |
|---|---|---|---|---|---|---|---|---|---|---|---|---|
| Composition of fluorinated polymer [mass%] | Units a | C60LF | 50 | 50 | 50 | 50.0 | 49.3 | 49.3 | 50 | 72.5 | 50 | 49.3 |
| | Units b | DADMAC | 5 | 5 | 5 | 5 | 4.9 | 4.9 | - | - | - | - |
| | Units c | VAC | 45 | 40 | 45 | 40 | 44.3 | 39.4 | 50 | 27.5 | 50 | 49.3 |
| | | NVP | - | 5 | - | 5 | - | 4.9 | - | - | - | - |
| | | R450 | - | - | - | - | 1.48 | 1.48 | - | - | - | 1.48 |
| Cationic surfactant | | Added / Not added | Not added | Not added | Added | Added | Not added | Not added | Not added | Not added | Added | Not added |
| | | Parts | - | - | 0.25 | 0.25 | - | - | - | - | 0.25 | - |
| Stability | | Buffer | ○ | ○ | ○ | ○ | ○ | ○ | × | × | × | × |
| | | Aqueous NaOH | Δ | ○ | ○ | ○ | ○ | ○ | × | × | Δ | × |
| Oil resistance | | Kit test | 5 | 5 | 5 | 5 | 5 | 5 | 5 | 5 | 5 | 5 |
| | | Soybean oil | 3 | 5 | 4 | 4 | 5 | 5 | 3 | 3 | 3 | 3 |

As shown in Table 4, the fluorinated polymer dispersions of Examples 1 to 6 which comprised a fluorinated polymer comprising units based on a monomer b were stable under highly alkaline conditions.

The test papers treated with the treating solutions of Examples 1 to 6 showed good oil resistance. Especially, the test papers treated with the treating solutions of Examples 5 to 6 which comprised a fluorinated polymer comprising units based on R450 as a monomer c1 showed excellent oil resistance.

In contrast, the fluorinated polymer dispersions of Examples 7 to 10 which comprised a fluorinated polymer comprising no units based on a monomer b were not stable under highly alkaline conditions.

### INDUSTRIAL APPLICABILITY

The water- and oil-proofing composition of the present invention is useful as a water- and oil-proofing agent for paper, a surface treatment for glass, resin products and the like, a water and oil repellent, an antifouling agent, a release agent and the like.

Water- and oil-proof paper obtained by using the water- and oil-proofing composition of the present invention is useful as food packaging, food wrapping, an antifouling sheet and the like.

The entire disclosure of Japanese Patent Application No. 2019-193654 filed on October 24, 2019 including specification, claims, drawings and summary is incorporated herein by reference in its entirety.

## Claims

1. A water- and oil-proofing composition comprising a fluorinated polymer and an aqueous medium,
wherein the fluorinated polymer comprises units based on the following monomer a and units based on the following monomer b:
monomer a: a compound represented by the following formula (1)
CH₂=CH-R^{f} (1)
wherein R^{f} is a C₁₋₈ perfluoroalkyl group,
monomer b: a compound having a polymerizable unsaturated group and a cationic group.

2. The water- and oil-proofing composition according to Claim 1, wherein R^{f} in the formula (1) is a C₁₋₆ perfluoroalkyl group.

3. The water- and oil-proofing composition according to Claim 1 or 2, wherein the cationic group in the monomer b is a tertiary amino group or a quaternary ammonium group.

4. The water- and oil-proofing composition according to any one of Claims 1 to 3, wherein the monomer b has at least two polymerizable unsaturated groups in the molecule.

5. The water- and oil-proofing composition according to any one of Claims 1 to 4, wherein the ratio of the sum of units based on the monomer a and units based on the monomer b is at least 35.5 mass% relative to all the units constituting the fluorinated polymer.

6. The water- and oil-proofing composition according to any one of Claims 1 to 5, wherein the ratio of units based on the monomer a is from 35 to 80 mass%, and the ratio of units based on the monomer b is from 0.5 to 10 mass%, relative to all the units constituting the fluorinated polymer.

7. The water- and oil-proofing composition according to any one of Claims 1 to 6, wherein the fluorinated polymer further comprises units based on the following monomer c:
monomer c: another monomer copolymerizable with the monomer a and the monomer b which has no cationic groups.

8. The water- and oil-proofing composition according to Claim 6 or 7, wherein units based on the monomer c include units based on the following monomer c1:
monomer c1: a fluorine-free nonionic surfactant having a polymerizable unsaturated group.

9. The water- and oil-proofing composition according to Claim 8, wherein the monomer c1 is a compound represented by the following formula (2):
CH₂=CR¹-R²-O-R³-H (2)
wherein R¹ is a hydrogen atom or a methyl group, R² is a C₁₋₆ alkylene group, and R³ is a bivalent group having a polyoxyalkylene chain (having a carbon atom bonded to the neighboring CH₂=CR¹-R²-O-).

10. The water- and oil-proofing composition according to any one of Claims 1 to 9, wherein the fluorinated polymer has a number average molecular weight of from 10,000 to 100,000.

11. A method for producing a water- and oil-proofing composition which comprises polymerizing a monomer component in an emulsion comprising an aqueous medium, the monomer component and a polymerization initiator to obtain a water- and oil-proofing composition comprising the aqueous medium and a fluorinated polymer, wherein the monomer component comprises the following monomer a and the following monomer b:
monomer a: a compound represented by the following formula (1)
CH₂=CH-R^{f} (1)
wherein R^{f} is a C₁₋₈ perfluoroalkyl group,
monomer b: a compound having a polymerizable unsaturated group and a cationic group.

12. The method for producing a water- and oil-proofing composition according to Claim 11, wherein the ratio of the sum of the monomer a and the monomer b is at least 35.5 mass% relative to the monomer component.

13. The method for producing a water- and oil-proofing composition according to Claim 11 or 12, wherein the monomer component further comprises the following monomer c:
monomer c: another monomer copolymerizable with the monomer a and the monomer b which has no cationic groups.

14. The method for producing a water- and oil-proofing composition according to Claim 13, wherein the ratio of the monomer a is from 35 to 80 mass%, the ratio of the monomer b is from 0.5 to 10 mass%, and the ratio of the monomer c is from 10 to 64.5 mass%, relative to the monomer component.

15. The method for producing a water- and oil-proofing composition according to Claim 13 or 14, wherein the monomer c includes the following monomer c1:
monomer c1: a fluorine-free nonionic surfactant having a polymerizable unsaturated group.
